# FASCICULE DE BREVET EUROPEEN

(11) **EP 2 204 296 B1**
(45) Date de publication et mention de la délivrance du brevet: **04.04.2012**
(21) Numéro de dépôt: 10157254.3
(22) Date de dépôt: 17.10.2006
(51) Int. Cl.: B29C 33/42, B60C 13/00

(54) **Marquage d'un pneumatique offrant une meilleure visibilité et procédé de marquage d'un pneumatique**
Reifenmarkierung mit einer verbesserten Sichtbarkeit und Verfahren zur Reifenmarkierung
Tyre marking offering better visibility and tyre marking method

(30) Priorité: 21.10.2005 FR 0510848
(43) Date de publication de la demande: 07.07.2010
(62) Demande divisionnaire de: 06806316.3
(73) Titulaire: Société de Technologie Michelin, 63000 Clermont-Ferrand (FR); Michelin Recherche et Technique S.A., 1763 Granges-Paccot (CH)
(72) Inventeur: Paturle, Antoine, 63430 Pont-du-Château (FR)
(74) Mandataire: Diernaz, Christian

(56) Documents cités:
- EP-A- 0 416 846
- EP-A- 1 063 071
- JP-A- 6 106 920
- US-A- 3 935 359
- US-A- 4 444 713
- US-A1- 2003 230 370
- US-A1- 2004 187 997

## Description

L'invention concerne un marquage ainsi qu'un procédé de réalisation d'un tel marquage d'articles divers et notamment, mais non exclusivement, d'articles en matière plastique ou caoutchoutique.

Dans le domaine du marquage des articles, on connaît l'emploi de pièces rapportées sur ces articles, ces pièces constituant un marquage ayant pour finalité d'être facilement visibles par un observateur. La fabrication de telles pièces rapportées est notamment connue du document US 3 935 359 A. Ce type de marquage nécessite l'emploi d'un support et d'un adhésif entre le support et l'article. On comprend aisément que ce type de marquage, bien qu'assez simple, soit assez difficile à mettre en oeuvre en particulier si on veut tenir compte des contraintes d'usage de l'article comportant un tel marquage.

Dans un autre type de marquage, on procède à la réalisation du marquage directement sur l'article lui même par exemple en usinant ledit marquage sur la surface de l'article. En variante, lorsque l'article est obtenu par moulage dans un moule, on obtient un marquage sur cet article par l'usinage sur le moule du négatif de ce marquage de manière à pouvoir reproduire ledit marquage sur l'article pendant le moulage. La fabrication d'un tel marquage est notamment connue du document EP 0 416 846 A.

Dans une autre variante de réalisation, un motif de marquage est réalisé sur un support, ledit support étant ensuite placé dans un logement sur le moule.

L'invention concerne plus particulièrement les articles de type pneumatique en matériau caoutchoutique comportant un marquage intégré. Des pneumatiques comportant de tels marquages sont notamment connus des documents US 4 444 713 A, EP 1 063 071 A, US 2004/187997 A1, US 2003/230370 A1, JP 6 106920 A.

Il est ainsi recherché un marquage intégré qui présente une visibilité améliorée par rapport aux marquages connus et qui est de plus suffisamment pérenne pour être visible après usage du pneumatique.

L'invention concerne un pneumatique en matériau caoutchoutique comme défini dans la revendication 1, comportant une surface visible comprenant, sur au moins une partie de cette surface, un motif comprenant une pluralité de brins de matériau caoutchoutique de même nature que le pneumatique, de manière à accentuer la visibilité du motif pour faire contraste par rapport à la surface du pneumatique. La pluralité de brins est répartie sur la totalité dudit motif. Chaque brin a une section moyenne comprise entre 0,003 et 0,06 mm². De plus, la densité des brins sur la surface du motif est au moins égale à cinq brins par unité de surface exprimée en millimètre carré (mm²). En outre, la section de chaque brin diminue en allant de la base du brin vers l'extrémité dudit brin.

Le motif ainsi obtenu résout les problèmes évoqués plus haut en relation avec l'art antérieur et ce motif, tout en étant plus pérenne, présente un très fort contraste sur une surface de même couleur (cette surface pouvant être de couleur noire ou bien de toute autre couleur). Il est important de relever qu'outre le renforcement de la visibilité par un contraste et une luminance augmentées, le motif selon l'invention confère à l'article sur lequel il est réalisé un toucher particulièrement agréable, du type "velours".

Grâce au marquage selon l'invention, il est possible avec la même couleur que celle de l'article sur lequel le marquage est réalisé d'avoir un marquage de très fort contraste dont la pérennité est assurée par le nombre et la longueur des brins.

En outre, la section de chaque brin diminue en allant de la surface de l'article vers l'extérieur, c'est-à-dire de la base du brin vers l'extrémité dudit brin. De cette manière, on réduit les surfaces sensiblement parallèles à la surface de base de l'article, ce qui se traduit par un contraste renforcé. Dans le même objectif, il est judicieux de choisir des géométries de section des brins appropriées, notamment de forme polygonale, pour que les surfaces résiduelles entre les bases desdits brins sur la surface de l'article soient réduites. Ceci est atteint quand les bases sont en contact entre elles.
Des formes avantages de l'invention font l'objet des revendications dépendantes.

Dans une variante de réalisation, la densité des brins sur la surface du motif est au moins égale à quinze brins par unité de surface exprimée en millimètre carré (mm²).

Dans une autre variante de réalisation, la hauteur moyenne des brins est au moins égale à 0,1 mm.

Dans une autre variante de réalisation, la surface visible est de couleur noire.

Dans une autre variante de réalisation, le motif comprend des brins de différentes hauteurs et de forme diverses disposés selon des densités appropriées pour obtenir des variations de contraste.

Le motif réalisé peut ainsi reproduire un motif complexe c'est-à-dire non plus seulement un contour délimitant une surface de couleur contrastant avec la couleur de base de l'article mais un motif montrant des parties de contrastes différents à l'intérieur même dudit motif. Par exemple, l'article peut comporter la reproduction d'une photographie montrant des dégradés d'une même couleur, ces dégradés faisant contraste avec la couleur de base de l'article. Dans ce but, les brins formant le motif ont des hauteurs variables et des géométries de section de forme variable et ils sont répartis de façon appropriée pour obtenir des dégradés de couleur. Il est ainsi possible de gérer le contraste selon un motif donné.

Dans une autre variante de réalisation, le pneumatique comprend une bande de roulement ayant une surface de roulage pour venir en contact avec la chaussée pendant le roulage dudit pneumatique, cette bande de roulement comprenant une sculpture formée par une pluralité d'éléments en relief séparés les uns des autres par des rainures, ce pneumatique étant caractérisé en ce que le motif de contraste élevé est formé sur au moins une partie des éléments de relief.

Dans une autre variante de réalisation, le motif de contraste élevé est réalisé sur au moins les parties de matériaux délimitant les rainures dans le but d'obtenir une plus grande visibilité de la sculpture du pneumatique.

Dans une autre variante de réalisation, la densité des brins est supérieure à 100 brins par mm² et ces brins sont de forme sensiblement conique.

Dans une autre variante de réalisation, les extrémités des brins affleurent la surface du pneumatique ou sont en retrait par rapport à la surface du pneumatique dans une sorte de logement réalisé sur la surface du pneumatique.

Un autre objet de l'invention concerne un procédé de moulage selon la revendication 10, pour former un motif de contraste élevé sur une surface d'un pneumatique en matériau caoutchoutique moulable dans un moule. Ce procédé consiste à réaliser sur le moule une pluralité de protubérances ayant une section moyenne comprise entre 0,003 et 0,06 mm² et selon au moins une densité de protubérances au moins égale à cinq protubérances par unité de surface exprimée en millimètre carré (mm²) pour mouler une pluralité de puits sur la surface dudit pneumatique.

Un autre objet de l'invention concerne un procédé de marquage d'un motif sur au moins une partie d'une surface visible d'un pneumatique en matériau caoutchoutique selon la revendication 11. Ce motif comprend une pluralité de brins de matériau caoutchoutique de même nature que le pneumatique, de manière à accentuer la visibilité du motif pour faire contraste par rapport à la surface du pneumatique, la pluralité de brins étant répartie sur la totalité dudit motif, chaque brin ayant une section moyenne comprise entre 0,003 et 0,06 mm², la densité des brins sur la surface du motif étant au moins égale à cinq brins par unité de surface exprimée en millimètre carré (mm²), la section de chaque brin diminuant en allant de la base du brin vers l'extrémité dudit brin et dans lequel on réalise les brins, selon des dimensions et arrangements voulus, au moyen d'un laser enlevant progressivement de la matière caoutchoutique.

Grâce à ce procédé, le moule de l'article comprend une série d'orifices à l'intérieur desquels la matière de l'article va être moulé de façon à créer sur ledit article une pluralité de brins ou poils sensiblement parallèles les uns aux autres et faisant saillie sur la surface de l'article pour constituer de manière visible avec un fort contraste le motif voulu.

D'autres caractéristiques et avantages de l'invention ressortent de la description faite ci-après en référence aux dessins annexés qui montrent, à titre d'exemples non limitatifs, des formes de réalisation de l'objet de l'invention.

La figure 1 montre une vue partielle d'un article comportant sur une de ses surfaces un marquage selon l'invention ;

La figure 2 montre une partie d'un moule métallique pour mouler l'article de la figure 1 ;

La figure 3 montre une vue en coupe selon la ligne A-A prise sur la figure 2 ;

La figure 4 montre une vue en coupe d'une variante de moule selon l'invention ;

La figure 5 montre une section d'un pneumatique ainsi qu'une vue locale de la surface dudit pneumatique.

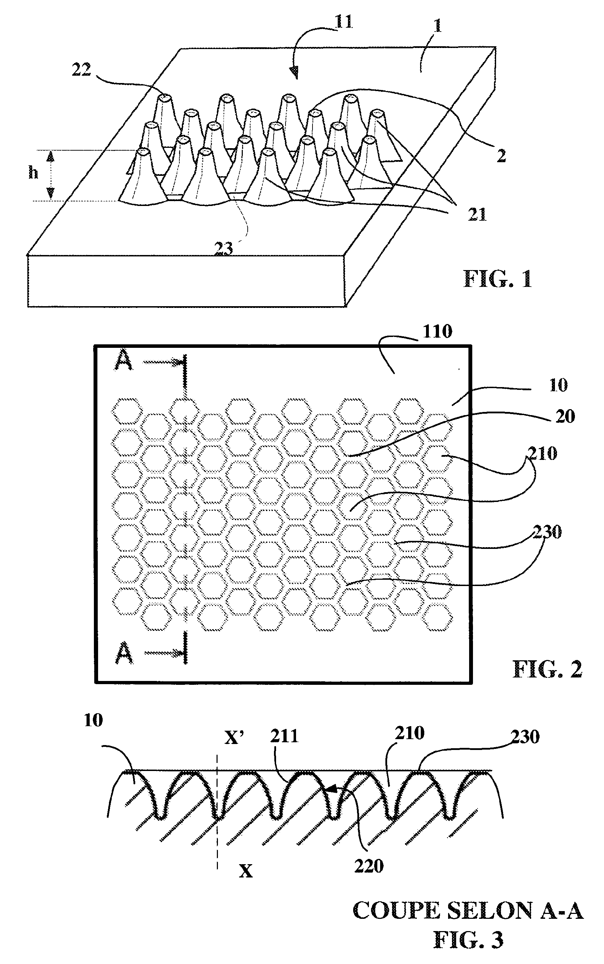

La figure 1 montre un article 1 dont une surface externe 11 est pourvue d'un marquage 2 particulièrement visible et de fort contraste sous toute incidence de la lumière grâce à la mise en oeuvre de l'invention.

Ce marquage 2 est formé par une pluralité de brins 21 faisant saillie sur la surface 11 de l'article 1. Le contour de l'ensemble de ces brins 21 sur la surface de l'article correspond précisément au contour du marquage 2. Chaque brin 21 s'appuie sur une base sur la surface 11 de l'article et présente une section qui décroît progressivement en s'éloignant de ladite surface 11. Chaque brin 21 a une hauteur h égale à 0.12 mm et a une section à la base équivalente à celle d'un disque de diamètre 0.15 mm (soit une section égale à environ 0,018 mm²). Par ailleurs, chaque brin 21 se termine à son extrémités la plus éloignée de la surface de l'article par une partie 22 de forme bombée pour éviter une forme plane.

Par ailleurs, les parties 23 de surface entre les bases des brins 21 sont les plus réduites possibles afin de limiter le plus possible les surfaces planes sensiblement parallèles à la surface 11 de l'article. Pour cela, la densité, c'est-à-dire le nombre de brins par unité de surface de l'article, est dans le cas présent égale à sensiblement 55 brins par millimètres carrés (mm²).

La figure 2 montre une partie d'un moule métallique 10 pour mouler un article semblable à celui de la figure 1, par injection de matière à l'intérieur dudit moule 10. Sur une partie de ce moule, il est réalisé un motif 20 de forme générale rectangulaire. À l'intérieur de ce motif 20, on a réalisé sur la surface 110 du moule une pluralité de cavités 210 (formant des trous) de profondeur moyenne égale à 0,12 mm (préférentiellement la profondeur est comprise entre 0,1 et 0,2 mm, mais elle peut être supérieure) et disposés de façon à former une sorte de structure en "nid d'abeille". Cette structure en nid d'abeille est particulièrement intéressant car elle présente l'avantage de réduire les surfaces résiduelles entre les bases des brins moulés et ainsi d'améliorer la visibilité du motif moulé. Ces cavités 210 ont sur la surface 110 du moule 10 une forme hexagonale de dimension moyenne égale à 0,12 mm (préférentiellement 0,1 à 0,2 mm).

Les parties 230 de moule séparant chacune des cavités ont une épaisseur moyenne égale à 0,03 mm sur la surface du moule, cette épaisseur allant progressivement en augmentant avec la profondeur dans le moule. Il est essentiel de réduire le plus possible les distances entre les cavités sur la surface du moule afin de réduire le plus possible les surfaces sensiblement parallèle à la surface moyenne de l'article sur lequel est réalisé le marquage. La surface moyenne de l'article correspond à la surface sous jacente au marquage ; en effet, plus le motif de marquage est formé de surfaces inclinées par rapport à cette surface moyenne et plus la visibilité dudit marquage est améliorée.

L'usinage des cavités 2 est réalisé au moyen d'un laser par passages successifs. À chaque passage, une certaine quantité de matière est enlevée. Le fond de chaque cavité présente un profil en demi sphère ce qui évite à l'extrémité des brins moulés dans ces cavités de présenter des surfaces planes, ce qui accroît encore la visibilité du marquage.

Dans la variante présentée, la forme de chaque cavité présente une symétrie autour d'un axe XX' sensiblement perpendiculaire à la surface du moule comme cela est visible sur la figure 3 représentant une coupe selon une ligne A-A du moule 10 de la figure 2. Chaque cavité 210 réalisée dans le moule présente un profil sensiblement symétrique autour d'un axe XX' perpendiculaire à la surface du moule : ceci signifie que la cavité est obtenue en faisant tourner autour de l'axe XX' le profil 211 visible sur la figure 3. La réduction de la section de chaque cavité 210 est très marquée entre la surface du moule et les deux tiers de la profondeur desdites cavités. Chaque cavité 210 se termine par une partie 220 qui n'est pas plane mais sensiblement hémisphérique.

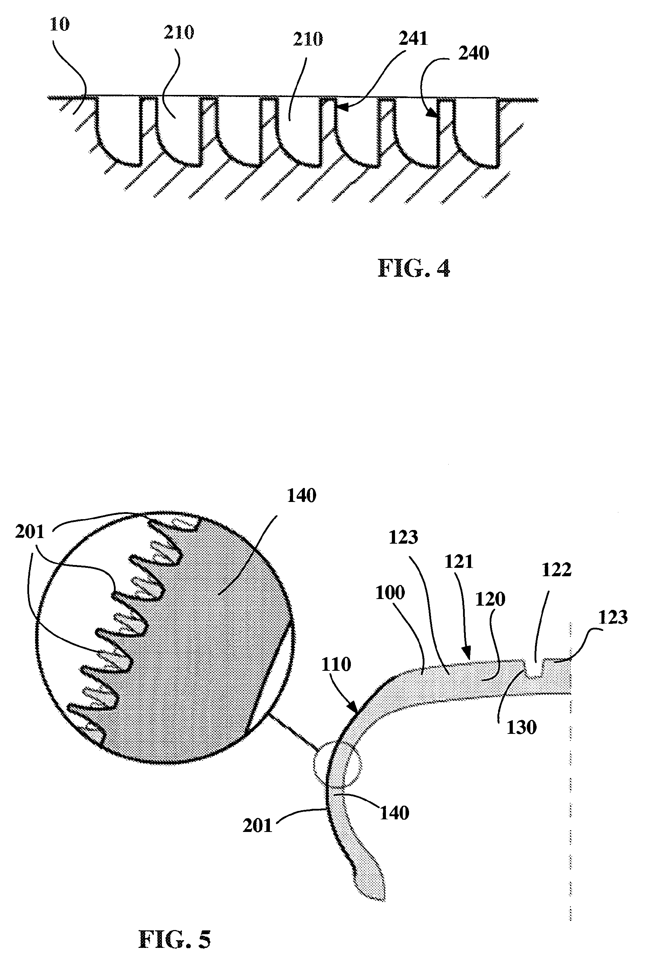

Dans une autre variante présentée en coupe avec la figure 4, la géométrie des cavités 210 est dissymétrique. Chaque cavité présente, dans la profondeur, une forme plane 240 combinée avec une forme sensiblement cylindrique 241 (sur la surface du moule, chaque cavité forme une ouverture comprenant un segment de droite dont les extrémités sont reliées par un arc de cercle). Cette variante permet de créer une variation de contraste du marquage en fonction de la direction d'observation.

Sur la figure 5, on a représenté un pneumatique 100 en caoutchouc de couleur noire, ledit pneumatique 100 comprenant des flancs 140 ayant une surface externe 110 visible lorsque le pneumatique est monté sur une jante de montage.

Ce pneumatique 100 a été moulé dans un moule en plusieurs parties, les parties moulant les flancs 140 du pneumatique étant entièrement pourvues d'une densité élevée (supérieure à 100 brins par mm²) de cavités telles que montrées avec la figure 1. Après moulage du pneumatique 100, les flancs 140 de ce dernier comporte un très grand nombre de brins 201 de forme sensiblement conique qui font saillie sur la surface 110 desdits flancs formant ainsi une sorte de texture, dont la section va en décroissant en s'éloignant de la surface de l'article. Sur cette même figure 5, on montre dans un médaillon un agrandissement localisé de la surface du flanc grâce auquel il est aisé de distinguer la pluralité de brins formant cette texture qui présente l'avantage de renforcer la couleur noire dudit flanc.

Avantageusement, les inscriptions usuelles de dimension du pneumatique et réglementaires sont elles aussi formées avec une texture selon l'invention.

Dans une autre variante, non montrée, ces inscriptions ne sont pas formées avec cette texture.

La pérennité des marquages selon l'invention est améliorée grâce notamment au fait que les surfaces planes visibles par un observateur regardant la surface de l'article pourvu dudit marquage sont sensiblement réduites.

Par ailleurs, on sait que certains des éléments chimiques rentrant dans la composition des mélanges de caoutchouc, notamment ceux employés pour les pneumatiques, peuvent migrer vers les surfaces extérieures et venir tacher ces surfaces. Grâce au marquage selon l'invention, l'impact de cette migration sur l'altération du marquage est limité, puisque, sans empêcher en tant que telle la migration, les surfaces étant relativement très inclinées par rapport à la surface moyenne du pneumatique, ces taches n'altèrent pas la perception visuelle des flancs, ce qui assure effectivement une plus grande pérennité audit marquage.

Ce qui a été présenté pour les flancs d'un pneumatique s'applique de façon semblable à d'autres parties visibles du pneumatique. Un pneumatique comprend notamment une bande de roulement pourvue d'une surface de roulage 121 (comme cela est visible sur la même figure 5) pour venir en contact avec la chaussée pendant le roulage dudit pneumatique, cette surface de roulage comprend en règle générale une sculpture formée par une pluralité d'éléments en relief 123 séparés les uns des autres par des rainures 122. Le marquage selon l'invention peut être réalisé sur la surface de roulement 121 ou sur une partie de ladite surface (par exemple uniquement sur les parois 130 des rainures 122).

L'invention n'est pas limitée aux exemples décrits et représentés et diverses modifications peuvent y être apportées sans sortir de son cadre. Notamment les brins peuvent prendre la forme de nervures c'est-à-dire de brins présentant une deuxième dimension au moins égale à deux fois la hauteur desdits brins. Cette dernière variante présente la particularité d'offrir une direction privilégiée selon laquelle le motif présente des différences de contraste et donc de visibilité selon la direction d'observation.

Ce qui a été présenté avec une couleur unique correspondant à celle de l'article peut aisément s'appliquer à la formation d'un marquage d'au moins une couleur différente de celle de l'article.

Enfin, en ce qui concerne le procédé de marquage il est possible, mais en général beaucoup plus coûteux, de réaliser directement sur le pneumatique les brins selon dimension et arrangement voulus par exemple au moyen de laser enlevant progressivement de la matière.

Dans une autre variante intéressante, le marquage selon l'invention est réalisé de manière à ce que les extrémités des brins affleurent la surface de l'article ou sont en retrait par rapport à la surface de l'article dans une sorte de logement réalisé sur la surface de l'article. Ainsi, il est possible d'avoir l'effet du marquage selon l'invention tout en limitant les effets sur ledit marquage d'un frottement de la surface de l'article contre un autre objet. Cette dernière variante peut être obtenue en formant sur la surface de moulage d'un moule une pluralité de protubérances ayant une section moyenne comprise entre 0,003 et 0,06 mm² et selon au moins une densité de protubérances au moins égale à cinq protubérances par unité de surface exprimée en millimètre carré (mm²). Au cours du moulage d'un article dans ce moule, une pluralité de puits sont moulés sur la surface dudit article. Les parties de matière entre les puits sont équivalentes aux brins des variantes précédemment présentées et il est ainsi possible d'avoir un motif à très fort contraste sur la surface de l'article moulé.

## Revendications

1. Pneumatique en matériau caoutchoutique comportant une surface visible comprenant, sur au moins une partie de cette surface, un motif comprenant une pluralité de brins (201) de matériau caoutchoutique de même nature que le pneumatique, de manière à accentuer la visibilité du motif pour faire contraste par rapport à la surface du pneumatique, la pluralité de brins (201) étant répartie sur la totalité dudit motif, **caractérisé en ce que** :
- chaque brin (201) a une section moyenne comprise entre 0,003 et 0,06 mm²,
- la densité des brins (201) sur la surface du motif est au moins égale à cinq brins par unité de surface exprimée en millimètre carré (mm²),
- la section de chaque brin (201) diminue en allant de la base du brin vers l'extrémité dudit brin.

2. Pneumatique selon la revendication 1 **caractérisé en ce que** la densité des brins (201) sur la surface du motif est au moins égale à quinze brins par unité de surface exprimée en millimètre carré (mm²).

3. Pneumatique selon l'une quelconque des revendications 1 ou 2 **caractérisé en ce que** la hauteur moyenne des brins (201) est au moins égale à 0,1 mm.

4. Pneumatique selon l'une quelconque des revendications 1 à 3 **caractérisé en ce que** la surface visible est de couleur noire.

5. Pneumatique selon l'une quelconque des revendications 1 à 4 **caractérisé en ce que** le motif comprend des brins de différentes hauteurs et de forme diverses disposés selon des densités appropriées pour obtenir des variations de contraste.

6. Pneumatique selon l'une quelconque des revendications 1 à 5, ce pneumatique comprenant une bande de roulement ayant une surface de roulage (121) pour venir en contact avec la chaussée pendant le roulage dudit pneumatique, cette bande de roulement comprenant une sculpture formée par une pluralité d'éléments en relief (123) séparés les uns des autres par des rainures (122), ce pneumatique étant **caractérisé en ce que** le motif de contraste élevé est formé sur au moins une partie des éléments de relief (123).

7. Pneumatique selon la revendication précédente **caractérisé en ce que** le motif de contraste élevé est réalisé sur au moins les parties (130) de matériaux délimitant les rainures (122) dans le but d'obtenir une plus grande visibilité de la sculpture du pneumatique.

8. Pneumatique selon la revendication 1 **caractérisé en ce que** :
- la densité des brins est supérieure à 100 brins par mm² ;
- les brins sont de forme sensiblement conique.

9. Pneumatique selon la revendication 1 **caractérisé en ce que** les extrémités des brins affleurent la surface du pneumatique ou sont en retrait par rapport à la surface du pneumatique dans une sorte de logement réalisé sur la surface du pneumatique.

10. Procédé de moulage pour former un motif de contraste élevé sur une surface d'un pneumatique en matériau caoutchoutique moulable dans un moule (10), ce procédé consistant à réaliser sur le moule une pluralité de protubérances ayant une section moyenne comprise entre 0,003 et 0,06 mm² et selon au moins une densité de protubérances au moins égale à cinq protubérances par unité de surface exprimée en millimètre carré (mm²) pour mouler une pluralité de puits sur la surface dudit pneumatique.

11. Procédé de marquage d'un motif sur au moins une partie d'une surface visible d'un pneumatique en matériau caoutchoutique, ledit motif comprenant une pluralité de brins (201) de matériau caoutchoutique de même nature que le pneumatique, de manière à accentuer la visibilité du motif pour faire contraste par rapport à la surface du pneumatique, la pluralité de brins (201) étant répartie sur la totalité dudit motif, chaque brin (201) ayant une section moyenne comprise entre 0,003 et 0,06 mm², la densité des brins (201) sur la surface du motif étant au moins égale à cinq brins par unité de surface exprimée en millimètre carré (mm²), la section de chaque brin (201) diminuant en allant de la base du brin vers l'extrémité dudit brin et dans lequel on réalise les brins, selon des dimensions et arrangements voulus, au moyen d'un laser enlevant progressivement de la matière caoutchoutique.

## Claims

1. Tyre made of rubber material having at least one visible surface, this surface comprising on at least part of it, a pattern comprising a plurality of tufts (201) made of the same rubber material as the tire, in order to increase the visibility of the pattern to contrast with the surface of the tire, the plurality of tufts being provided on the whole surface of said pattern, **characterised in that**:
- each tuft (201) has an average cross section between 0.003 and 0.06 mm²,
- the density of the tufts (21) on the surface of the pattern is at least five tufts per unit area expressed in square millimetres (mm²),
- the cross section of each tuft (201) decreases from the base of the tuft to the tip of said tuft.

2. Tyre according to Claim 1, **characterized in that** the density of the tufts (201) on the surface of the pattern is at least equal to fifteen tufts per unit area expressed in square millimetres (mm²).

3. Tyre according to Claim 1 or Claim 2, **characterized in that** the average height of the tufts (21) is at least 0.1 mm.

4. Tyre according to any one of Claims 1 to 3, **characterized in that** the visible surface has a black colour.

5. Tyre according to any one of Claims 1 to 4, **characterized in that** the pattern comprises tufts of various heights and of diverse shapes arranged with appropriate densities in order to obtain variations in contrast.

6. Tyre according to any one of Claims 1 to 5, this tyre comprising a tread band having a rolling surface (121) to come into contact with the road during the rolling of said tyre, this tread band comprising a tread sculpture formed of a plurality of elements in relief (123) separated from each other by grooves (122), this tyre being **characterized in that** the pattern of high contrast is formed by at least a part of the elements of relief (123).

7. Tyre according to the preceding Claim, **characterized in that** the pattern of high contrast is formed on at least the parts (130) delimitating the grooves (122) so as to get a greater visibility of the tread sculpture of the tyre.

8. Tyre according to Claim 1, **characterized in that**:
- the density of the tufts is greater than 100 tufts per square millimetres (mm²),
- the tuft have of a conical geometry.

9. Tyre according to Claim 1, **characterized in that** the ends of the tufts are flush to the surface of the tyre or are in recess relative to the surface of the tyre in a kind of lodging formed on the tyre surface.

10. Moulding process for forming a high-contrast pattern on a surface of a rubber material tyre that can be moulded in a mould (10), this process consisting in producing, on the surface of the mould, a plurality of protuberances having an average cross section between 0.003 and 0.06 mm², and with a density of protuberances of at least five protuberances per unit area of mould, expressed in square millimetres (mm²) to mould a plurality of cavities on the surface of said tyre.

11. Moulding process for moulding a pattern on at least a visible surface of a tyre made of rubber material, this pattern comprising a plurality of tufts (201) made of the same rubber material as the tyre, in order to increase the visibility of the pattern to contrast with the surface of the tire, the plurality of tufts (201) being provided on the whole surface of said pattern, each tuft (201) having an average cross section between 0.003 and 0.06 mm², the density of the tufts (201) on the surface of the pattern is at least five tufts per unit area expressed in square millimetres (mm²), the cross section of each tuft (201) decreasing from the base of the tuft to the tip of said tuft, and in which one makes the tufts, according to searched dimensions and arrangements, thanks to a laser beam removing progressively rubber material.

## Patentansprüche

1. Luftreifen aus Kautschukmaterial, der eine sichtbare Fläche aufweist, die über mindestens einen Teil dieser Fläche ein Muster aufweist, das eine Vielzahl von Fasern (201) aus Kautschukmaterial gleicher Beschaffenheit wie der Luftreifen enthält, um die Sichtbarkeit des Musters zu verstärken, damit es sich von der Fläche des Luftreifens abhebt, wobei die Vielzahl von Fasern (201) über die Gesamtheit des Musters verteilt ist, **dadurch gekennzeichnet, dass**:
- jede Faser (201) einen mittleren Querschnitt zwischen 0,003 und 0,06 mm² hat,
- die Dichte der Fasern (201) auf der Fläche des Musters mindestens gleich fünf Fasern pro Flächeneinheit, ausgedrückt in Quadratmillimetern (mm²), ist,
- der Querschnitt jeder Faser (201) sich von der Basis der Faser zum Ende der Faser verringert.

2. Luftreifen nach Anspruch 1, **dadurch gekennzeichnet, dass** die Dichte der Fasern (201) auf der Fläche des Musters mindestens gleich fünfzehn Fasern pro Flächeneinheit, ausgedrückt in Quadratmillimetern (mm²), ist.

3. Luftreifen nach einem der Ansprüche 1 oder 2, **dadurch gekennzeichnet, dass** die mittlere Höhe der Fasern (201) mindestens gleich 0,1 mm ist.

4. Luftreifen nach einem der Ansprüche 1 bis 3, **dadurch gekennzeichnet, dass** die sichtbare Fläche von schwarzer Farbe ist.

5. Luftreifen nach einem der Ansprüche 1 bis 4, **dadurch gekennzeichnet, dass** das Muster Fasern verschiedener Höhen und unterschiedlicher Formen enthält, die gemäß geeigneten Dichten angeordnet sind, um Kontrastveränderungen zu erhalten.

6. Luftreifen nach einem der Ansprüche 1 bis 5, wobei dieser Luftreifen einen Laufstreifen mit einer Lauffläche (121) enthält, um während des Rollens des Luftreifens mit der Straße in Kontakt zu kommen, wobei dieser Laufstreifen ein Profil enthält, das von einer Vielzahl von erhabenen Elementen (123) gebildet wird, die voneinander durch Rillen (122) getrennt sind, wobei dieser Luftreifen **dadurch gekennzeichnet ist, dass** das hochstehende Kontrastmuster über mindestens einen Teil der Reliefelemente (123) geformt ist.

7. Luftreifen nach dem vorhergehenden Anspruch, **dadurch gekennzeichnet, dass** das hochstehende Kontrastmuster über mindestens die Bereiche (130) von Materialien hergestellt ist, die die Rillen (122) begrenzen, um eine größere Sichtbarkeit des Profils des Luftreifens zu erhalten.

8. Luftreifen nach Anspruch 1, **dadurch gekennzeichnet, dass**:
- die Dichte der Fasern größer als 100 Fasern pro mm² ist;
- die Fasern eine im Wesentlichen kegelige Form haben.

9. Luftreifen nach Anspruch 1, **dadurch gekennzeichnet, dass** die Enden der Fasern bündig mit der Fläche des Luftreifens oder bezüglich der Fläche des Luftreifens in einer Art Aufnahme nach hinten versetzt sind, die an der Fläche des Luftreifens hergestellt ist.

10. Formgebungsverfahren zum Formen eines hochstehenden Kontrastmusters auf einer Fläche eines Luftreifens aus Kautschukmaterial, der in einem Formwerkzeug (10) geformt werden kann, wobei dieses Verfahren darin besteht, auf dem Formwerkzeug eine Vielzahl von Vorsprüngen, die einen mittleren Querschnitt zwischen 0,003 und 0,06 mm² haben, und gemäß einer Dichte von Vorsprüngen mindestens gleich fünf Vorsprüngen pro Flächeneinheit, ausgedrückt in Quadratmillimetern (mm²), herzustellen, um eine Vielzahl von Senken an der Fläche des Luftreifens zu formen.

11. Verfahren zum Markieren eines Musters auf mindestens einem Teil einer sichtbaren Fläche eines Luftreifens aus Kautschukmaterial, wobei das Muster eine Vielzahl von Fasern (201) aus Kautschukmaterial gleicher Beschaffenheit wie der Luftreifen enthält, um die Sichtbarkeit des Musters zu verstärken, damit es sich von der Fläche des Luftreifens abhebt, wobei die Vielzahl von Fasern (201) über die Gesamtheit des Musters verteilt ist, wobei jede Faser (201) einen mittleren Querschnitt hat, der zwischen 0,003 und 0,06 mm² liegt, wobei die Dichte der Fasern (201) über die Fläche des Musters mindestens gleich fünf Fasern pro Flächeneinheit, ausgedrückt in Quadratmillimetern (mm²), ist, wobei der Querschnitt jeder Faser (201) von der Basis der Faser zum Ende der Faser abnimmt, und wobei die Fasern gemäß beabsichtigten Abmessungen und Anordnungen mittels eines Lasers hergestellt werden, der progressiv Kautschukmaterial entfernt.
